# EUROPEAN PATENT APPLICATION

(11) **EP 4 578 513 A1**
(43) Date of publication of application: **02.07.2025**
(21) Application number: 24220680.3
(22) Date of filing: 17.12.2024
(51) Int. Cl.: A62C 3/16, H01M 10/613, H01M 10/627, H01M 10/6563, H01M 50/251, H01M 50/383

(54) **ENERGY STORAGE CONTAINER AND ENERGY STORAGE SYSTEM**

(30) Priority: 28.12.2023 CN 202323639088 U
(71) Applicant: Huawei Digital Power Technologies Co., Ltd., Shenzhen, Guangdong 518043 (CN)
(72) Inventor: LI, Ping, Shenzhen, Guangdong 518043 (CN); WANG, Yongling, Shenzhen, Guangdong 518043 (CN); WANG, Shuqin, Shenzhen, Guangdong 518043 (CN); HE, Bo, Shenzhen, Guangdong 518043 (CN); WANG, Yongchao, Shenzhen, Guangdong 518043 (CN)
(74) Representative: Maiwald GmbH

(57) **Abstract**

This application provides an energy storage container and an energy storage system. The energy storage container includes a container body, and two compartments are adjacently arranged in a length direction of the container body. One compartment is a battery compartment used for battery packs, and a temperature control compartment and a power distribution compartment are adjacently arranged in a height direction of the container body in the other compartment. The temperature control compartment is stacked above the power distribution compartment. The temperature control compartment is configured to accommodate a liquid cooling unit. The power distribution compartment is configured to accommodate an adapter cable device, a fire extinguishing device, and a power distribution device. Therefore, internal space of the battery compartment is continuous, and accommodates only a battery cluster, to implement electrical isolation. Therefore, the battery cluster can be placed in the battery compartment, to improve space utilization of the battery compartment, improve energy storage density of the energy storage container, and perform unified thermal management on the battery cluster. In addition, a battery layout of the battery compartment can be designed based on sizes of the battery packs.

## Description

### TECHNICAL FIELD

This application relates to the field of energy storage device technologies, and in particular, to an energy storage container and an energy storage system.

### BACKGROUND

With increased global efforts to develop new energy technologies, various energy storage technologies have been widely used, among which container-based energy storage is widely used. How to place more battery modules inside an energy storage container, improve space utilization of the energy storage container, and make the energy storage container more integrated becomes a problem to be urgently resolved.

### SUMMARY

This application provides an energy storage container and an energy storage system, to improve space utilization of a battery compartment, and enhance energy storage.

According to a first aspect, this application provides an energy storage container. The energy storage container includes a container body. Specifically, two compartments are adjacently arranged in a length direction of the container body, one of the two compartments is a battery compartment, and the battery compartment is configured to accommodate a cluster control box and a plurality of battery packs stacked above the cluster control box. The cluster control box is configured to manage the plurality of battery packs stacked above the cluster control box. In the other of the two compartments, a temperature control compartment and a power distribution compartment are adjacently arranged in a height direction of the container body, and the temperature control compartment is stacked above the power distribution compartment. The temperature control compartment is configured to accommodate a liquid cooling unit. The power distribution compartment is configured to accommodate an adapter cable device, a fire extinguishing device, and a power distribution device. Therefore, the temperature control compartment and the power distribution compartment are located at one end of the battery compartment, to implement electrical isolation. Therefore, internal space of the battery compartment is continuous, and a battery cluster can be continuously placed in the battery compartment, to improve space utilization of the battery compartment, and improve energy storage density of the energy storage container. In addition, the plurality of battery packs are laid out continuously in the battery compartment, to implement unified thermal management of the battery compartment. In addition, the cluster control box is placed in the battery compartment, so that another device or apparatus such as the fire extinguishing device can be placed in the power distribution compartment, to further improve integration of the energy storage container. In addition, because a flammable gas generated by the battery packs is usually accumulated at the top of the battery compartment, the cluster control box is placed at the bottom of the battery compartment, to reduce a safety risk caused by electrical sparking. This enhances safety of the energy storage container.

In the foregoing power distribution compartment, positions of the adapter cable device, the fire extinguishing device, and the power distribution device are not limited. In a possible implementation, the adapter cable device, the fire extinguishing device, and the power distribution device are sequentially arranged in a width direction of the container body.

In the energy storage container of this application, six cluster control boxes are disposed in the battery compartment, the six cluster control boxes are sequentially disposed in the length direction of the container body, and a plurality of battery packs are stacked above each cluster control box. In this way, each cluster control box and the plurality of battery packs above the cluster control box are in one column, and the plurality of battery packs are a battery cluster, so that one battery cluster can be separately maintained by one cluster control box.

In the foregoing energy storage container, the battery compartment includes a top wall, a bottom wall, and three side walls, and the battery compartment is enclosed by the three side walls, the top wall, the bottom wall, and one of partition plates. Six side doors are disposed on at least one of two side walls extending along the length direction of the container body in the three side walls. The six side doors are disposed in a one-to-one correspondence with the six battery clusters, so that a side door can be opened to replace or maintain one battery cluster separately.

The battery compartment may be provided with single-side doors or double-side doors. In a possible implementation, the battery compartment may be provided with single-side doors. Specifically, the six side doors are disposed on one of the two side walls, and a fireproof plate is disposed on each of a surface that is of the other side wall and that faces the battery cluster and a surface that is of the other of the three side walls and that faces the battery cluster. The fireproof plate may include a calcium silicate plate, a glass wool plate, a gypsum plate, an aluminum foil composite plate, or a rock wool plate, to prevent a flame from affecting an apparatus around the container body when an accidental fire occurs inside the container body.

In a possible implementation, two partition plates are disposed in the container body. One of the two partition plates extends along the height direction of the container body, and one compartment and the other compartment are respectively located on two sides of the partition plate. The other of the two partition plates is disposed perpendicular to the partition plate, and the temperature control compartment and the power distribution compartment are respectively located on two sides of the other partition plate. An air intake vent and an air exhaust vent are disposed on the other compartment, and a heat dissipation channel is formed between the air intake vent and the air exhaust vent. The other compartment includes a top wall and three side walls. The three side walls each are disposed perpendicular to the top wall, and the temperature control compartment is enclosed by parts of the three side walls, a part of one of the partition plates, the other partition plate, and the top wall. The air exhaust vent is disposed on the top wall, and the air intake vent is disposed on at least one of the three side walls. When the energy storage container dissipates heat, external air enters the temperature control compartment through the air intake vent on the side wall, and flows out from the top of the temperature control compartment through the heat dissipation channel. In other words, a heat dissipation airflow enters the container body from the side and flows out from the top, so that the airflow takes heat from the bottom to the top. This can improve heat dissipation efficiency of the entire container.

A specific quantity of air intake vents is not limited. In a possible implementation, one air intake vent may be disposed on the temperature control compartment, and the air intake vent may be disposed on a side wall of the three side walls that is far away from one of the partition plates. That is, the air intake vent is disposed on a side wall extending along the width direction of the container body. In another possible implementation, three air intake vents may be disposed on the temperature control compartment, and one air intake vent is disposed on each of the three side walls of the temperature control compartment, so that air can enter the temperature control compartment from three sides, to increase an air intake flow and improve heat dissipation efficiency.

In a possible implementation, the liquid cooling unit includes a heat exchanger and a fan, and the fan is stacked above the heat exchanger in the height direction of the container body. The heat exchanger includes two air intake surfaces, the two air intake surfaces are disposed in a V shape, and at least one air intake surface faces the side wall. Alternatively, the heat exchanger includes three air intake surfaces, the three air intake surfaces are disposed in a U shape, and the three air intake surfaces are disposed opposite to the three side walls in a one-to-one correspondence.

In a possible implementation, a length of the other compartment along the length direction of the container body is less than a width of the other compartment in the width direction of the container body. In this way, in a container body of a standard size, a length of the other compartment in the length direction of the container body may be set to be small, so that a size of the battery compartment is increased, to increase internal space of the battery compartment for accommodating more battery packs.

In a possible implementation, a length of the temperature control compartment in the length direction of the container body is 400 mm to 800 mm, a width of the temperature control compartment in the width direction of the container body is 1600 mm to 2200 mm, and a height of the temperature control compartment in the height direction of the container body is 1500 mm to 2000 mm. A length of the power distribution compartment in the length direction of the container body is 400 mm to 800 mm, a width of the power distribution compartment in the width direction of the container body is 1600 mm to 2200 mm, and a height of the power distribution compartment in the height direction of the container body is 500 mm to 1200 mm.

In a possible implementation, a length of the container body is 6000 mm to 6100 mm, a width of the container body is 2400 mm to 2600 mm, and a height of the container body is 2591 mm to 4150 mm.

In the foregoing implementation, the container body may be a 20-foot standard container.

In a possible implementation, the power distribution device may be connected to the battery packs through a plurality of cables, and the plurality of cables are located at the bottom of the container body. In other words, the power distribution device may be connected to the battery packs through a cabling network located at the bottom of the container body.

According to a second aspect, this application further provides an energy storage system. The energy storage system includes a power converter and the energy storage container in the first aspect. The power converter is configured to convert an alternating current input by an external alternating current power supply into a direct current for output to the energy storage container, and/or the power converter is configured to convert a direct current output by the energy storage container into an alternating current for output to a load or a power grid. In the energy storage system in this application, the temperature control compartment and the power distribution compartment of the energy storage container are located at one end of the battery compartment, to implement electrical isolation. Therefore, internal space of the battery compartment is continuous, and a battery cluster can be continuously disposed in the battery compartment, to improve space utilization of the energy storage container and energy storage density of the energy storage container.

### BRIEF DESCRIPTION OF DRAWINGS

FIG. 1 is a diagram of an energy storage system according to an embodiment of this application;
FIG. 2 is a diagram of an energy storage container according to an embodiment of this application;
FIG. 3 is a diagram of an energy storage container according to an embodiment of this application;
FIG. 4 is a diagram of a container body according to an embodiment of this application;
FIG. 5 is a main view of the container body in FIG. 4;
FIG. 6 is a left view of the energy storage container in FIG. 3;
FIG. 7 is a left view of the container body in FIG. 4;
FIG. 8 is a main view of the energy storage container in FIG. 3;
FIG. 9 is another diagram of an energy storage container according to an embodiment of this application;
FIG. 10 is another diagram of an energy storage container according to an embodiment of this application;
FIG. 11 is another diagram of an energy storage container according to an embodiment of this application;
FIG. 12 is a diagram of a liquid cooling unit according to this application;
FIG. 13 is a left view and a right view of the liquid cooling unit in FIG. 12;
FIG. 14 is another diagram of a liquid cooling unit according to this application;
FIG. 15 is a left view and a right view of the liquid cooling unit in FIG. 14;
FIG. 16 is another diagram of a liquid cooling unit according to this application;
FIG. 17 is a left view and a right view of the liquid cooling unit in FIG. 16;
FIG. 18 is another diagram of a liquid cooling unit according to this application;
FIG. 19 is a left view and a right view of the liquid cooling unit in FIG. 18;
FIG. 20 is a diagram of a layout of a battery pack heat dissipation system according to an embodiment of this application;
FIG. 21 is a diagram of another layout of a battery pack heat dissipation system according to an embodiment of this application; and
FIG. 22 is another diagram of an energy storage system according to an embodiment of this application.

### Reference numerals:

10: energy storage system;
11: power converter;
20: energy storage container;
21: container body;
22: battery pack;
23: cluster control box;
24: liquid cooling unit;
25: power distribution device;
26: fire extinguishing device;
27: adapter cable device;
28: first partition plate;
29: second partition plate;
30: cooling pipe network;
31: first cooling pipe;
32: second cooling pipe;
20a: first energy storage container;
20b: second energy storage container;
20c: third energy storage container;
20d: fourth energy storage container;
211: first compartment;
212: second compartment;
241: heat exchanger;
242: fan;
321: nozzle;
2111: divider plate;
2112: battery cluster compartment;
2113: battery compartment door;
2121: temperature control compartment;
2122: power distribution compartment;
2123: air intake vent;
2124: air exhaust vent;
2125: side door;
2411: air intake surface.

### DESCRIPTION OF EMBODIMENTS

To make the objectives, technical solutions, and advantages of this application clearer, the following further describes this application in detail with reference to the accompanying drawings.

It should be noted that, terms used in the following embodiments are only for a purpose of describing specific embodiments, but are not intended to limit this application. The terms "one", "a", "an", "the", and "this" of singular forms used in this specification and the appended claims of this application are also intended to include expressions such as "one or more", unless otherwise specified in the context clearly.

Reference to "an embodiment", "some embodiments", or the like described in this specification indicates that one or more embodiments of this application include a specific feature, structure, or characteristic described with reference to the embodiment. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. The terms "include", "have", and their variants all mean "include but are not limited to", unless otherwise specifically emphasized in another manner.

With rapid development of energy storage devices, an energy storage container is also widely applied. The energy storage container is a highly integrated energy storage apparatus, may accommodate a plurality of stacked energy storage battery packs, and is connected to an external device through a few interfaces. The energy storage container has features of high integration, small footprint, and good scalability, and is an important part of development of distributed energy, a smart grid, and an energy internet in an energy storage system. However, some functional areas of an existing energy storage container are disposed in the middle of a container body, and space for placing energy storage battery packs is partitioned, resulting in low space utilization of the energy storage container.

Therefore, this application provides an energy storage container and an energy storage system, to improve space utilization of a battery compartment, and enhance energy storage.

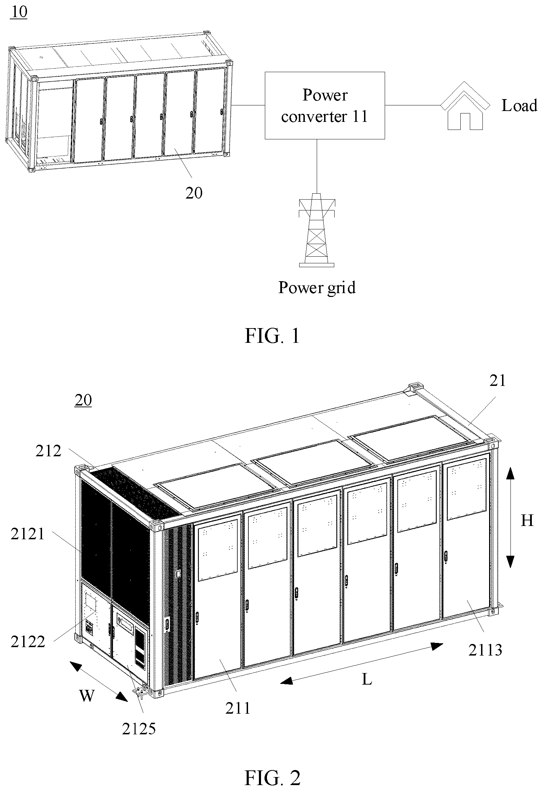

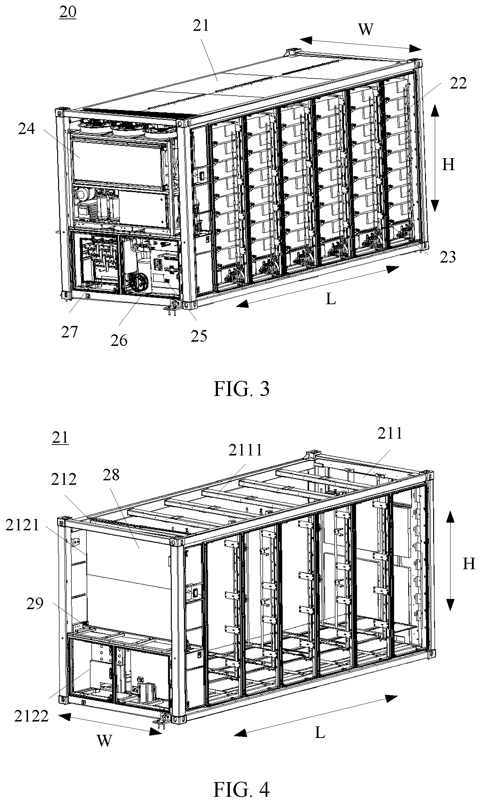

FIG. 1 is a diagram of an energy storage system according to an embodiment of this application. As shown in FIG. 1, an energy storage system 10 includes a power converter 11 and an energy storage container 20. The power converter 11 is configured to convert an alternating current input by an external alternating current power supply into a direct current for output to the energy storage container 20, and/or the power converter 11 is configured to convert a direct current output by the energy storage container 20 into an alternating current for output to a load or a power grid. FIG. 2 is a diagram of an energy storage container according to an embodiment of this application. FIG. 3 is a diagram of an energy storage container according to an embodiment of this application. As shown in FIG. 2 and FIG. 3, the energy storage container 20 includes a container body 21 and a plurality of battery packs 22. Specifically, the plurality of battery packs 22 are accommodated in the container body 21, and are sequentially arranged in a plurality of battery clusters in a length direction L of the container body 21. The energy storage container 20 may further include devices or apparatuses such as a cluster control box 23, a liquid cooling unit 24, a power distribution device 25, a fire extinguishing device 26, and an adapter cable device 27. It should be noted that, during actual application, the energy storage container 20 may be placed on the ground. A surface that is of the container body 21 and that is in contact with the ground is a bottom surface. A size of the bottom surface includes a length and a width. A length direction of the bottom surface is in a same direction as the length direction L of the container body 21, and a width direction of the bottom surface is in a same direction as a width direction W of the container body 21. A size of the container body 21 perpendicular to the bottom surface is a height, and an extension direction of the height is a height direction H of the container body 21.

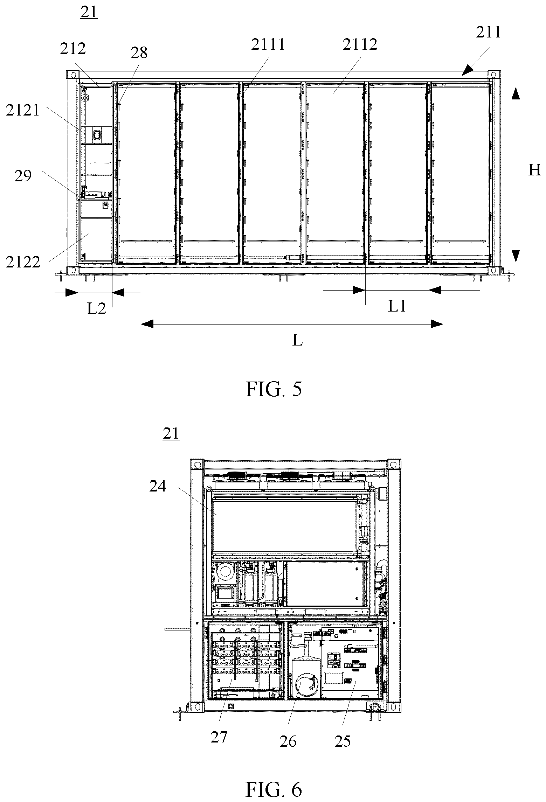

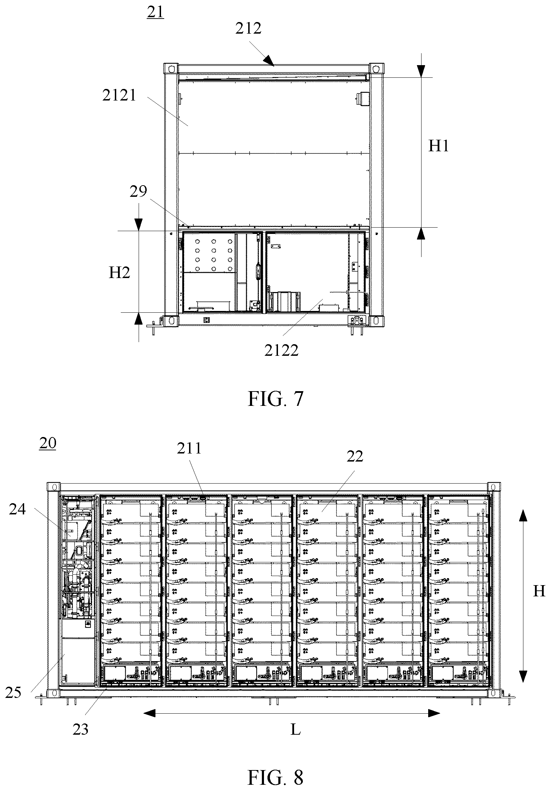

FIG. 4 is a diagram of a container body according to an embodiment of this application. FIG. 5 is a main view of the container body in FIG. 4. As shown in FIG. 4 and FIG. 5, a first partition plate 28 and a second partition plate 29 are disposed in the container body 21, and the first partition plate 28 and the second partition plate 29 are disposed perpendicular to each other. Specifically, the first partition plate 28 extends along the height direction H, and the first partition plate 28 divides internal space of the container body 21 into a first compartment 211 and a second compartment 212. The first compartment 211 and the second compartment 212 are disposed side by side in the length direction L. The first compartment 211 is a battery compartment, and is configured to accommodate the plurality of battery packs 22 and the cluster control box 23. The plurality of battery packs 22 are stacked above the cluster control box 23 in the height direction H. The cluster control box 23 is configured to manage the plurality of battery packs 22 stacked above the cluster control box 23. FIG. 6 is a left view of the energy storage container in FIG. 3. FIG. 7 is a left view of the container body in FIG. 4. As shown in FIG. 6 and FIG. 7, the second partition plate 29 divides the second compartment 212 into a temperature control compartment 2121 and a power distribution compartment 2122. The temperature control compartment 2121 is stacked above the power distribution compartment 2122 in the height direction H. The temperature control compartment 2121 is configured to accommodate the liquid cooling unit 24. The power distribution compartment 2122 is configured to accommodate the power distribution device 25, the fire extinguishing device 26, and the adapter cable device 27.

It should be noted that the orientation names such as front, rear, left, right, top, and bottom in this application are merely used to indicate relative positions of the compartments in the container body 21, but are not used to limit specific positions of the compartments.

As shown in FIG. 3 and FIG. 4, in the energy storage container 20 according to this application, the second compartment 212 is disposed on one side of the first compartment 211, so that the first compartment 211 can form a battery compartment having continuous space, and the battery packs 22 can be continuously and properly distributed in the first compartment 211. Therefore, internal space of the first compartment 211 can be fully used, a quantity of battery packs 22 that are accommodated in the first compartment 211 is increased, and energy storage density of the first compartment 211 is improved. This helps enhance energy storage and integration of the energy storage container 20. In addition, the temperature control compartment 2121 and the power distribution compartment 2122 are located on one side of the first compartment 211, to implement electrical isolation in the energy storage container 20, and perform unified thermal management on the plurality of battery packs 22 in the first compartment 211. In addition, the cluster control box 23 is placed in the first compartment 211, so that another device or apparatus such as the fire extinguishing device 26 can be placed in the power distribution compartment 2122, to further improve integration of the energy storage container 20.

FIG. 8 is a main view of the energy storage container in FIG. 3. As shown in FIG. 8, in the first compartment 211, the plurality of cluster control boxes 23 are sequentially arranged in the length direction L. A plurality of battery packs 22 are stacked above each cluster control box 23, and the plurality of battery packs 22 may correspond to one battery cluster. Such a layout facilitates an operation of the cluster control box 23 by personnel. In addition, because a flammable gas generated by the battery packs 22 is usually accumulated at the top of the first compartment 211, the cluster control box 23 is placed at the bottom, to reduce a safety risk caused by electrical sparking. This enhances safety of the energy storage container 20. As shown in FIG. 2 and FIG. 3, in a specific embodiment, the internal space of the first compartment 211 is divided into six battery cluster compartments 2112, and one cluster control box 23 is disposed in each battery cluster compartment 2112. In this way, the six cluster control boxes 23 are sequentially disposed in the length direction L of the container body 21. A plurality of battery packs 22 are stacked above each cluster control box 23. In other words, the plurality of battery packs 22 form six battery clusters in the length direction L and the six battery clusters each are accommodated in the battery cluster compartment 2112. Therefore, the cluster control box 23 in each battery cluster compartment 2112 may independently manage a plurality of battery packs 22 in the battery cluster compartment 2112.

Still refer to FIG. 4 and FIG. 5. In the first compartment 211, two adjacent battery clusters may be separated. Specifically, a plurality of divider plates 2111 are disposed in the first compartment 211. These divider plates 2111 are parallel to the first partition plate 28, and divide the first compartment 211 into the plurality of battery cluster compartments 2112. Each battery cluster compartment 2112 accommodates one battery cluster and one cluster control box 23. A plurality of guide rails are disposed on each of two opposite surfaces of each divider plate 2111 in the length direction L. These guide rails are arranged in parallel at intervals in the height direction H, and each guide rail extends along the width direction W. Correspondingly, a plurality of guide rails are disposed on a surface that is of the first partition plate 28 and that faces the first compartment 211. The plurality of guide rails disposed on the first partition plate 28 overlap orthographic projections of the plurality of guide rails disposed on the divider plate 2111 in the length direction L. Therefore, in any battery cluster compartment 2112, any one of the plurality of battery packs 22 may be slidably connected to two guide rails disposed opposite to each other in the length direction L in the battery cluster compartment 2112. The battery packs 22 slide into the battery cluster compartment 2112 along the guide rails, so that the battery packs 22 can be continuously stacked in the battery cluster compartment 2112 in the height direction H, to form a plurality of battery clusters that are continuously placed in the length direction L. This improves space utilization of the energy storage container 20. When the battery packs 22 are installed, the battery packs 22 directly slide into the battery cluster compartment 2112 through the guide rails. This facilitates an operation of personnel, and can improve assembly efficiency and disassembly efficiency of personnel. Certainly, during actual application, the divider plate 2111 in the first compartment 211 may be omitted, and the guide rails may be directly installed on a side wall of the container body 21.

In the energy storage container in this application, an internal size of the first compartment 211 may be designed according to an actual size of the battery pack 22. For example, in an embodiment, in the first compartment 211, a distance between a divider plate 2111 that is close to the first partition plate 28 in the length direction L of the container body 21 and the first partition plate 28 is equal to a length of the battery pack 22, and a distance between any two adjacent divider plates 2111 is equal to the length of the battery pack 22. In any battery cluster compartment 2112, a distance between any two adjacent guide rails in the height direction H of the container body 21 is greater than or equal to a height of the battery pack 22.

As shown in FIG. 2, in the container body 21 in this application, the first compartment 211 may be provided with single-side doors or double-side doors Specifically, the first compartment 211 may include a top wall, a bottom wall, and three side walls. The first compartment 211 is enclosed by the three side walls, the top wall, the bottom wall, and the first partition plate 28. The three side walls include a right side wall and two opposite side walls (that is, a front side wall and a rear side wall) that extend along the length direction L. A plurality of battery compartment doors 2113 are disposed on at least one of the two side walls. The plurality of battery compartment doors 2113 are disposed in a one-to-one correspondence with the plurality of battery cluster compartments 2112. In other words, each battery cluster compartment 2112 may have a single-side door or a double-side door.

In an actual application scenario, to implement unidirectional deployment of the battery packs 22 and a single-side door of the energy storage container 20, ultra-deep (with a depth of 1.7 m to 2.2 m) guide rails may be used in the first compartment 211. Specifically, the battery compartment doors 2113 are disposed on the front side wall of the first compartment 211. A fireproof plate is disposed on each of an inner surface that is of the right side wall and that faces the battery pack 22 and a surface that is of the rear side wall and that faces the battery pack 22, and the fireproof plate is located in the first compartment 211. The fireproof plate may include but not be limited to a calcium silicate plate, a glass wool plate, a gypsum plate, an aluminum foil composite plate, or a rock wool plate, to prevent a flame from affecting an apparatus around the container body 21 when an accidental fire occurs inside the container body 21.

As shown in FIG. 3 and FIG. 5, the second compartment 212 has a length L2 in the length direction L of the container body 21, and the second compartment 212 has a width W2 in the width direction W of the container body 21. The length L2 is less than the width W2. In the container body 21 of a standard size, the length L2 of the second compartment 212 may be set to be small, so that a length L1 of the first compartment 211 increases in the length direction L of the container body 21, to increase internal space of the first compartment 211, and increase a quantity of battery packs 22 accommodated in the first compartment 211.

In this embodiment of this application, a length of the container body may be 6000 mm to 6100 mm, a width of the container body may be 2400 mm to 2600 mm, and a height of the container body may be 2591 mm to 4150 mm. During actual application, the energy storage container 20 may be applied to a 20-foot standard container. That is, the container body 21 of the energy storage container 20 is a cube. The length of the container body 21 may be 6058 mm, and the width of the container body 21 may be 2438 mm. Eight corners of the container body 21 are provided with corner fitting structures for stacking during shipping, so that the energy storage container 20 can be stacked for shipping, to reduce shipping costs.

In an embodiment, in the second compartment 212, a length of the temperature control compartment in the length direction of the container body may be 400 mm to 800 mm, a width of the temperature control compartment in the width direction of the container body may be 1600 mm to 2200 mm, and a height H I of the temperature control compartment in the height direction of the container body may be 1500 mm to 2000 mm. A length of the power distribution compartment in the length direction of the container body may be 400 mm to 800 mm, a width of the power distribution compartment in the width direction of the container body may be 1600 mm to 2200 mm, and a height H2 of the power distribution compartment in the height direction of the container body may be 500 mm to 1200 mm.

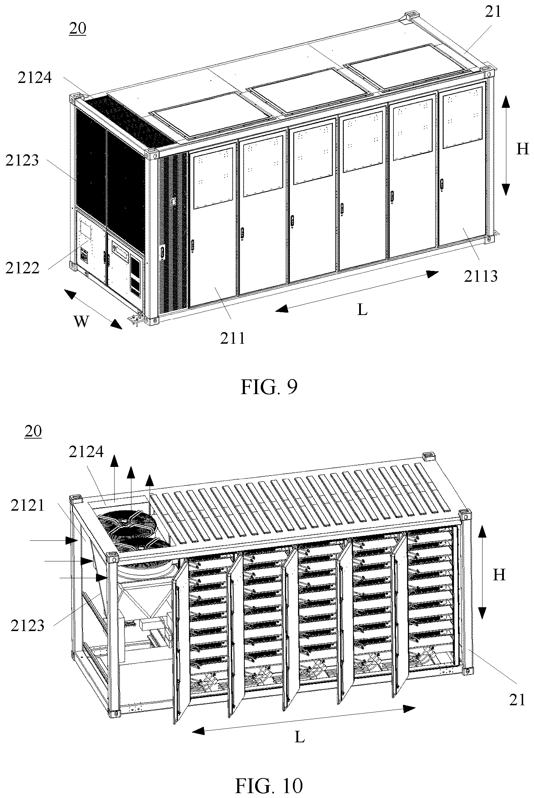

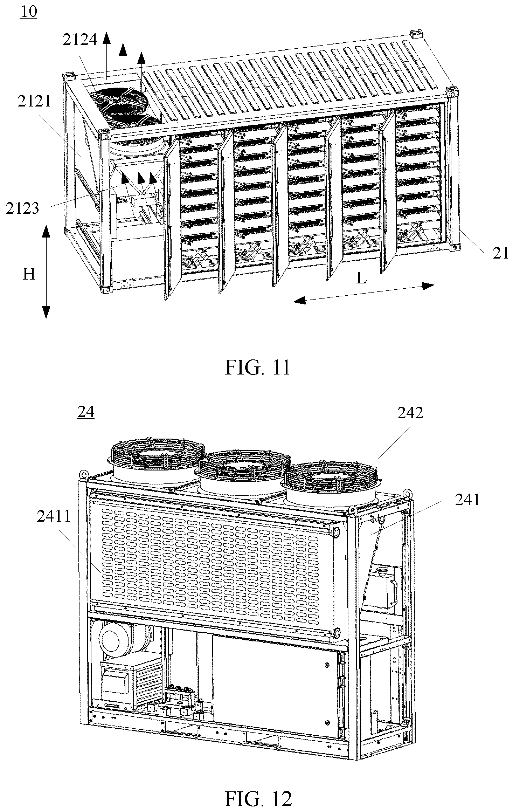

FIG. 9 is another diagram of an energy storage container according to an embodiment of this application. As shown in FIG. 9, in this application, the energy storage container 20 includes a liquid cooling unit 24, and the liquid cooling unit 24 is located in the temperature control compartment 2121. The liquid cooling unit 24 in this application uses a liquid cooling system. This can avoid a design of an air duct in the first compartment 211, and can implement a design without an air duct in the first compartment 211, to further improve an available capacity of the battery packs 22 in the first compartment 211 and improve energy density. FIG. 10 is another diagram of an energy storage container according to an embodiment of this application. FIG. 11 is another diagram of an energy storage container according to an embodiment of this application. As shown in FIG. 10 and FIG. 11, an air intake vent 2123 and an air exhaust vent 2124 are disposed on the temperature control compartment 2121, and a heat dissipation channel is formed between the air intake vent 2123 and the air exhaust vent 2124. Specifically, the second compartment 212 includes a top wall, a bottom wall, and three side walls. The three side walls are arranged in the height direction H, the top wall and the bottom wall are disposed opposite to each other, and the three side walls each are perpendicular to the top wall. The temperature control compartment 2121 is enclosed by parts of the three side walls, the second partition plate 29, and the top wall. The air exhaust vent 2124 may be disposed on the top wall, and the air intake vent 2123 may be disposed on the side wall. When the energy storage container 20 dissipates heat, external air enters the heat dissipation channel through the air intake vent 2123 on the side wall of the second compartment 212, and the heat dissipation channel is in communication with the liquid cooling unit 24. The entered air takes away heat of the liquid cooling unit 24, and flows out through the air exhaust vent 2124 on the top wall. In other words, air for heat dissipation enters the container body 21 from the side and flows out from the top. This can improve heat dissipation efficiency of the entire container. Certainly, the air exhaust vent 2124 may also be located at the top of the first compartment 211. In addition, a specific quantity and positions of air intake vents 2123 are not limited, either. For example, in an embodiment, one air intake vent 2123 is disposed on a side wall of the temperature control compartment 2121. The air intake vent 2123 may be located on any one of a front side wall (as shown in FIG. 11), a left side wall (as shown in FIG. 10), or a rear side wall of the temperature control compartment 2121. In another embodiment, two air intake vents 2123 may alternatively be disposed on the temperature control compartment 2121. The air intake vent 2123 may be disposed on each of any two of the front side wall, the left side wall, and the rear side wall of the temperature control compartment 2121. In another embodiment, three air intake vents 2123 may alternatively be disposed on the temperature control compartment 2121. The air intake vent 2123 is disposed on each of the front side wall, the left side wall, and the rear side wall of the temperature control compartment 2121, to increase an air flow entering the heat dissipation channel, and improve heat dissipation efficiency.

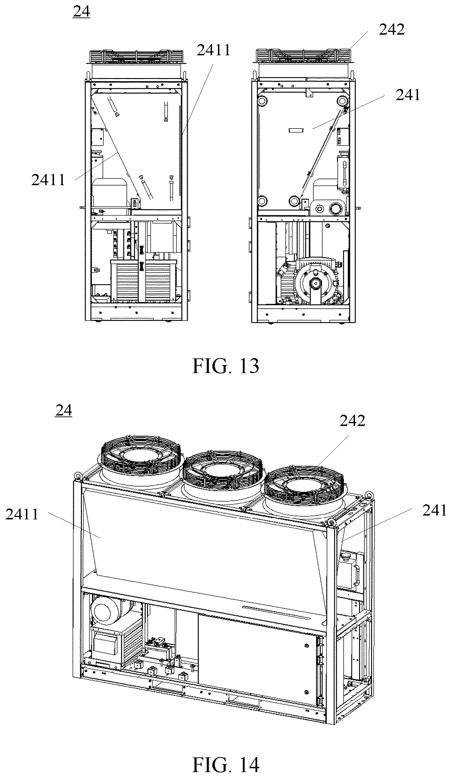

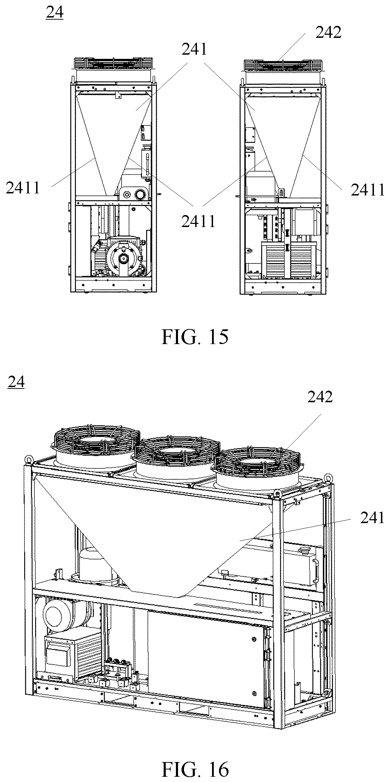

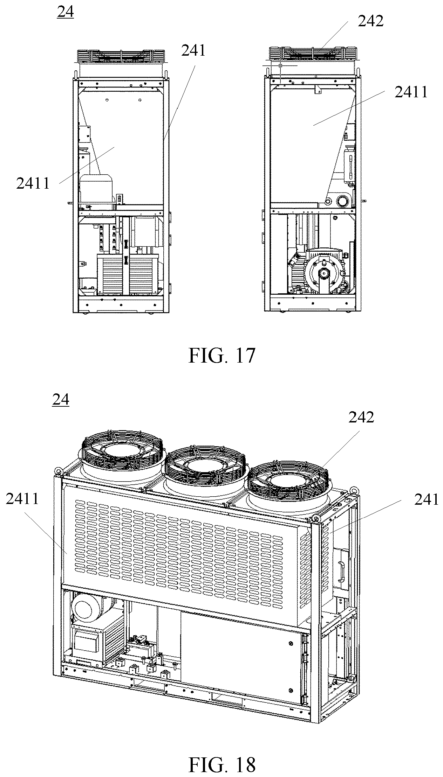

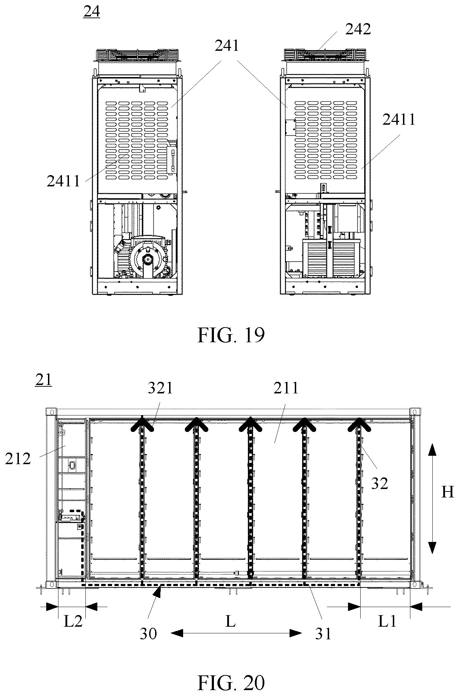

FIG. 12 is a diagram of a liquid cooling unit according to this application. FIG. 13 is a left view and a right view of the liquid cooling unit in FIG. 12. As shown in FIG. 12 and FIG. 13, the liquid cooling unit 24 may include a heat exchanger 241 and a fan 242. The fan 242 is stacked above the heat exchanger 241 in the height direction H of the container body 21, and the fan 242 is in communication with the air exhaust vent 2124. The heat exchanger 241 may include an air intake surface 2411. The air intake surface 2411 is disposed facing the air intake vent 2123, and is parallel to the left side wall of the temperature control compartment 2121. In this embodiment, the air intake vent 2123 may be disposed on the left side wall of the temperature control compartment 2121. Therefore, when the energy storage container 20 dissipates heat, air entering through the air intake vent 2123 can directly take away heat of the heat exchanger 241 through the air intake surface 2411. In another embodiment, the heat exchanger 241 may further include another air intake surface 2411, and the two air intake surfaces 2411 are opposite to each other and are disposed in a V shape. In other words, the another air intake surface 2411 is disposed facing the first partition plate 28. In this embodiment, in addition to the left side wall of the temperature control compartment 2121, the air intake vent 2123 may further be disposed on the front side wall and/or the rear side wall of the temperature control compartment 2121. When the energy storage container 20 dissipates heat, air entering through the air intake vents 2123 on the front side wall and/or the rear side wall takes away heat of the heat exchanger 241 through the another air intake surface 2411. FIG. 14 is another diagram of a liquid cooling unit according to this application. FIG. 15 is a left view and a right view of the liquid cooling unit in FIG. 14. As shown in FIG. 14 and FIG. 15, the two air intake surfaces 2411 of the heat exchanger 241 may also be disposed in a symmetrical V shape in the height direction H of the container body 21. One air intake surface 2411 faces the left side wall of the temperature control compartment 2121, and the other air intake surface 2411 faces the first partition plate 28. In this case, the air intake vent 2123 is disposed on at least one of the front side wall, the left side wall, and the rear side wall of the temperature control compartment 2121. FIG. 16 is another diagram of a liquid cooling unit according to this application. FIG. 17 is a left view and a right view of the liquid cooling unit in FIG. 16. As shown in FIG. 16 and FIG. 17, in another embodiment, when the heat exchanger 241 includes two air intake surfaces 2411 disposed in a symmetrical V shape, one of the two air intake surfaces 2411 faces the front side wall of the temperature control compartment 2121, and the other air intake surface 2411 faces the rear side wall of the temperature control compartment 2121. In this case, the air intake vent 2123 is disposed on each of the front side wall and the rear side wall of the temperature control compartment 2121. Certainly, the air intake vent 2123 may further be disposed on the left side wall of the temperature control compartment 2121. FIG. 18 is another diagram of a liquid cooling unit according to this application. FIG. 19 is a left view and a right view of the liquid cooling unit in FIG. 18. As shown in FIG. 18 and FIG. 19, in another embodiment, the heat exchanger 241 includes three air intake surfaces 2411. The three air intake surfaces 2411 are disposed in a U shape and are disposed opposite to the three side walls of the temperature control compartment 2121 in a one-to-one correspondence. In this case, one air intake vent 2123 is disposed on each of the three side walls of the temperature control compartment, so that air can enter the temperature control compartment 2121 from three sides, to further increase an air intake flow and improve heat dissipation efficiency.

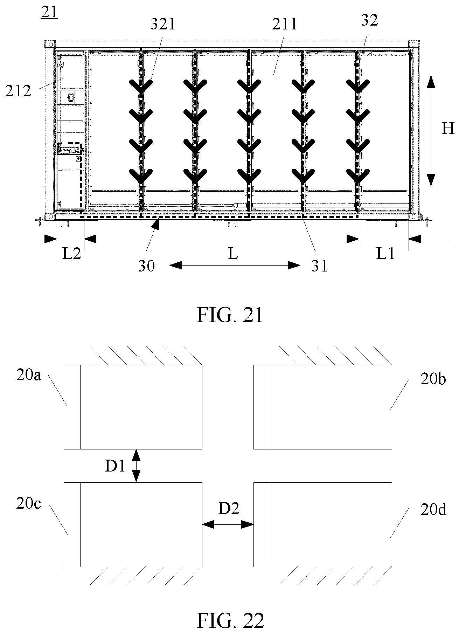

FIG. 20 is a diagram of a layout of a battery pack heat dissipation system according to an embodiment of this application. As shown in FIG. 20, the liquid cooling unit 24 may be configured to dissipate heat for the battery packs 22 in the first compartment 211. Specifically, the energy storage container 20 includes a cooling pipeline network 30, and the cooling pipeline network 30 is located in the first compartment 211 and extends into the second compartment 212 to connect to the liquid cooling unit 24. In the first compartment 211, the cooling pipeline network 30 includes at least one first cooling pipe 31 and a plurality of second cooling pipes 32. The first cooling pipe 31 is distributed at the bottom of the container body 21, and extends along the length direction L of the container body 21. The first cooling pipe 31 is connected to the liquid cooling unit 24. The second cooling pipes 32 extend along the height direction H of the container body 21, and are in communication with the first cooling pipe 31. The plurality of second cooling pipes 32 are sequentially disposed in the length direction L. Specifically, the second cooling pipes 32 may be disposed in two adjacent battery cluster compartments 2112. A nozzle 321 is disposed on the second cooling pipe 32, and is configured to deliver cold air to the battery cluster compartment 2112. In an embodiment, the nozzle 321 may be disposed at the top of the second cooling pipe 32 in the height direction H. FIG. 21 is a diagram of another layout of a battery pack heat dissipation system according to an embodiment of this application. As shown in FIG. 21, in another embodiment, to improve heat dissipation efficiency, a plurality of nozzles 321 may alternatively be disposed on the second cooling pipe 32, and the plurality of nozzles 321 are sequentially disposed in the height direction H.

In this embodiment of this application, the container body 21 has a top plate, a bottom plate, and four side plates. The top plate and the bottom plate are disposed opposite to each other. The four side plates are located between the top plate and the bottom plate, and each are disposed perpendicular to the top plate, and the container body 21 is enclosed by the four side plates, the top plate, and the bottom plate. As shown in FIG. 2, in this application, the temperature control compartment 2121 and the power distribution compartment 2122 may be provided with side doors 2125. The power distribution device 25, the fire extinguishing device 26, and the adapter cable device 27 are adjacently disposed in the power distribution compartment 2122 in the width direction W. Certainly, in another embodiment, positions of the power distribution device 25, the fire extinguishing device 26, and the adapter cable device 27 may also be interchanged. Alternatively, in another embodiment, one of the power distribution device 25, the fire extinguishing device 26, and the adapter cable device 27 may be stacked above the other two in the height direction H. Alternatively, in another embodiment, one of the power distribution device 25, the fire extinguishing device 26, and the adapter cable device 27 may be placed on one side of the other two in the length direction L. Specifically, a first side door is disposed at a position corresponding to the temperature control compartment 2121 on the left side plate (a side plate extending along the width direction W), so that personnel can directly operate the liquid cooling unit 24 after opening the first side door. A second side door is disposed at a position corresponding to the power distribution compartment 2122 on the left side panel, so that personnel can directly operate the cluster control box 23 and the power distribution device 25 after opening the second side door. In this embodiment of this application, the power distribution device 25 may be connected to the battery packs 22 through a cabling network, and the cabling network is located at the bottom of the container body 21.

In this embodiment of this application, the liquid cooling unit 24 and the fire extinguishing device 26 may be separately connected to the adapter cable device 27. In addition, the plurality of cluster control boxes 23 in the first compartment 211 may also be separately connected to the adapter cable device 27. In this embodiment, the adapter cable device 27 may arrange cables of the cluster control box 23, the liquid cooling unit 24, and the fire extinguishing device 26 in order, and then connect to the power distribution device 25 or an external device after being routed through the adapter cable device 27, to reduce maintenance difficulty, improve space utilization of the energy storage container, and further reduce electrical interference between cables.

FIG. 22 is another diagram of an energy storage system according to an embodiment of this application. As shown in FIG. 22, in an embodiment, an energy storage system 10 includes a first energy storage container 20a, a second energy storage container 20b, a third energy storage container 20c, and a fourth energy storage container 20d. The first energy storage container 20a, the second energy storage container 20b, the third energy storage container 20c, and the fourth energy storage container 20d may have single-side doors. During actual application, a door opening direction of the first energy storage container 20a is the same as a door opening direction of the second energy storage container 20b, a door opening direction of the third energy storage container 20c is the same as a door opening direction of the fourth energy storage container 20d, and the door opening direction of the first energy storage container 20a is opposite to the door opening direction of the third energy storage container 20c. In this way, the energy storage containers 20 can be laid out side by side and back to back, to reduce space occupied by the energy storage system 10 and improve energy density. In a back-to-back layout of containers, a distance D1 between two energy storage containers 20 that are disposed opposite to each other may be less than 600 mm. In a side-by-side layout of containers, a distance D2 between two energy storage containers 20 that are disposed side by side may be less than 1500 mm.

In addition, an active exhaust apparatus, a directional smoke exhaust apparatus, and/or an explosion relief apparatus may further be disposed in the container body 21 in this application, to further improve safety of the energy storage container 20. Details are not described herein.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. An energy storage container, wherein the energy storage container comprises a container body;
two compartments are adjacently arranged in a length direction of the container body, one of the two compartments is a battery compartment, the battery compartment is configured to accommodate a cluster control box and a plurality of battery packs stacked above the cluster control box, and the cluster control box is configured to manage the plurality of battery packs stacked above the cluster control box; and
in the other of the two compartments, a temperature control compartment and a power distribution compartment are adjacently arranged in a height direction of the container body, the temperature control compartment is stacked above the power distribution compartment, the temperature control compartment is configured to accommodate a liquid cooling unit, and the power distribution compartment is configured to accommodate an adapter cable device, a fire extinguishing device, and a power distribution device.

2. The energy storage container according to claim 1, wherein the adapter cable device, the fire extinguishing device, and the power distribution device are sequentially arranged in a width direction of the container body.

3. The energy storage container according to claim 1 or 2, wherein six cluster control boxes are disposed in the battery compartment, the six cluster control boxes are sequentially disposed in the length direction of the container body, and the plurality of battery packs are stacked above each cluster control box.

4. The energy storage container according to claim 3, wherein the battery compartment comprises a top wall, a bottom wall, and three side walls, and the battery compartment is enclosed by the three side walls, the top wall, the bottom wall, and one of partition plates; and
six side doors are disposed on at least one of two side walls extending along the length direction of the container body in the three side walls, and the six side doors are disposed in a one-to-one correspondence with the six cluster control boxes.

5. The energy storage container according to claim 4, wherein the six side doors are disposed on one of the two side walls, and a fireproof plate is disposed on each of a surface that is of the other of the two side walls and that faces the battery packs and a surface that is of the other of the three side walls and that faces the battery packs.

6. The energy storage container according to claim 1 or 2, wherein two partition plates are disposed in the container body, one of the two partition plates extends along the height direction of the container body, one compartment and the other compartment are respectively located on two sides of the partition plate, the other of the two partition plates is disposed perpendicular to the partition plate, and the temperature control compartment and the power distribution compartment are respectively located on two sides of the other partition plate;
an air intake vent and an air exhaust vent are disposed on the other compartment, a heat dissipation channel is formed between the air intake vent and the air exhaust vent, the other compartment comprises a top wall and three side walls, the three side walls each are disposed perpendicular to the top wall, and the temperature control compartment is enclosed by parts of the three side walls, a part of one of the partition plates, the other partition plate, and the top wall; and
the air exhaust vent is disposed on the top wall, and the air intake vent is disposed on at least one of the three side walls.

7. The energy storage container according to claim 6, wherein the air intake vent is disposed on one of the three side walls that is far away from one of the partition plates, or the air intake vent is disposed on each of the three side walls.

8. The energy storage container according to claim 6 or 7, wherein the liquid cooling unit comprises a heat exchanger and a fan, and the fan is stacked above the heat exchanger in the height direction of the container body; and
the heat exchanger comprises two air intake surfaces, the two air intake surfaces are disposed in a V shape, and at least one of the two air intake surfaces faces the side wall; or
the heat exchanger comprises three air intake surfaces, the three air intake surfaces are disposed in a U shape, and the three air intake surfaces are disposed opposite to the three side walls in a one-to-one correspondence.

9. The energy storage container according to claim 1 or 2, wherein a length of the other compartment in the length direction of the container body is less than a width of the other compartment in the width direction of the container body.

10. The energy storage container according to claim 9, wherein a length of the temperature control compartment in the length direction of the container body is 400 mm to 800 mm, a width of the temperature control compartment in the width direction of the container body is 1600 mm to 2200 mm, and a height of the temperature control compartment in the height direction of the container body is 1500 mm to 2000 mm; and
a length of the power distribution compartment in the length direction of the container body is 400 mm to 800 mm, a width of the power distribution compartment in the width direction of the container body is 1600 mm to 2200 mm, and a height of the power distribution compartment in the height direction of the container body is 500 mm to 1200 mm.

11. The energy storage container according to claim 1 or 2, wherein a length of the container body is 6000 mm to 6100 mm, a width of the container body is 2400 mm to 2600 mm, and a height of the container body is 2591 mm to 4150 mm.

12. The energy storage container according to claim 9, wherein the container body is a 20-foot standard container.

13. The energy storage container according to claim 1 or 2, wherein the power distribution device is connected to the plurality of battery packs through a cabling network, and the cabling network is located at the bottom of the container body.

14. An energy storage system, wherein the energy storage system comprises the energy storage container according to any one of claims 1 to 13 and a power converter, the power converter is configured to convert an alternating current input by an external alternating current power supply into a direct current for output to the energy storage container, and/or the power converter is configured to convert a direct current output by the energy storage container into an alternating current for output to a load or a power grid.
